# EUROPÄISCHE PATENTSCHRIFT

(11) **EP 1 398 398 B1**
(45) Veröffentlichungstag und Bekanntmachung des Hinweises auf die Patenterteilung: **22.12.2010**
(21) Anmeldenummer: 03016290.3
(22) Anmeldetag: 18.07.2003
(51) Int. Cl.: C25D 1/10, B29C 33/56, C25D 1/00

(54) **Schale und deren Herstellungsverfahren duch galvanische Abscheidung**
Shell and its manufacturing process by electroplating
Coupe et son procédé de fabrication par electroplacage

(30) Priorität: 05.09.2002 DE 10240958
(43) Veröffentlichungstag der Anmeldung: 17.03.2004
(73) Patentinhaber: Galvanoform Gesellschaft für Galvanoplastik mbH, 77933 Lahr (DE)
(72) Erfinder: Hentrich, Rolf, 77933 Lahr (DE)
(74) Vertreter: RACKETTE Partnerschaft Patentanwälte

(56) Entgegenhaltungen:
- DE-A- 4 444 796
- US-A- 3 669 849
- US-A- 5 453 173
- US-A- 6 146 516
- US-A1- 2002 100 858

## Beschreibung

Die Erfindung betrifft eine durch galvanische Abscheidung hergestellte Schale.

Die Erfindung betrifft weiterhin ein Verfahren zur Herstellung einer vorgenannten Schale.

Derartige Schalen und Verfahren zur Herstellung dieser Schalen sind in der Praxis der Galvanotechnik bekannt. Schalen insbesondere mit mit verhältnismäßig kleinen Radien ausgebildeten länglichen Vertiefungen weisen jedoch für einige Anwendungen wie beispielsweise als Negativschalen bei der Herstellung von Kunststoffteilen den Nachteil auf, dass sie im Bereich der Vertiefungen gegenüber den zum Teil erheblichen betriebsüblichen mechanischen Belastungen verhältnismäßig empfindlich sind.

Aus der DE 44 44 796 A1 ist bekannt, bei einer galvanotechnisch hergestellten Schale Temperatursteuerröhren dadurch anzubringen, indem eine galvanogeformte Beschichtung die den Temperatursteuerröhren zugewandte Seite der Schale wenigstens bereichsweise, die Temperatursteuerröhren selbst und ein über die Temperatursteuerröhren sowie die den Temperatursteuerröhren zugewandten Seite der Schale gelegtes Netz bedeckt.

Der Erfindung liegt die Aufgabe zugrunde, eine durch galvanische Abscheidung hergestellte Schale anzugeben, die im Bereich einer Vertiefung verhältnismäßig hohen, beispielsweise thermisch induzierten oder sich aus der betriebsüblichen Handhabung ergebenden mechanischen Belastungen standhält.

Der Erfindung liegt weiterhin die Aufgabe zugrunde, ein Verfahren zur Herstellung einer derartigen Schale anzugeben, das zu einer Schale führt, die im Bereich einer Vertiefung verhältnismäßig hohen, beispielsweise thermisch induzierten oder sich aus der betriebsüblichen Handhabung ergebenden mechanischen Belastungen standhält.

Die erstgenannte Aufgabe wird erfindungsgemäß gelöst mit einer durch galvanische Abscheidung hergestellte Schale mit einer Schichtbereiche aufweisenden Abscheideschicht, die wenigstens eine Vertiefung aufweist, wobei als strukturell separates Element wenigstens eine stabilisierende Brückenstruktur vorhanden ist, die mit Abschnitten beidseitig einer Vertiefung in einen Schichtbereich eingebettet ist und die jeweilige Vertiefung überspannt.

Die zweitgenannte Aufgabe wird erfindungsgemäß gelöst mit einem Verfahren zur Herstellung einer erfindungsgemäßen Schale, bei dem in einem ersten Schritt in einer Elektrolytlösung auf einer elektrisch leitenden Oberfläche eines in die Elektrolytlösung eingetauchten Badmodelles galvanisch ein erster Schichtbereich einer Abscheideschicht abgeschieden wird, in einem zweiten Schritt über eine Vertiefung als strukturell separates Element wenigstens eine stabilisierende zumindest in Oberflächenbereichen elektrisch leitende Brückenstruktur mit Abschnitten auf den ersten Schichtbereich gelegt wird und in einem dritten Schritt wenigstens solange ein zweiter Schichtbereich der Abscheideschicht abgeschieden wird, bis die oder jede Brückenstruktur beidseitig der jeweiligen Vertiefung in den zweiten Schichtbereich eingebettet ist.

Dadurch, dass bei der erfindungsgemäßen Schale wenigstens eine die jeweilige Vertiefung überspannende und wenigstens in beidseitig der Vertiefung angeordneten Abschnitten in die Abscheideschicht eingebettete Brückenstruktur vorhanden ist, wird die betreffende, in der Regel mechanisch nur verhältnismäßig gering belastbare Vertiefung vor allem gegenüber Zugbelastungen, in einem gewissen Umfang jedoch auch gegenüber Druckbelastungen und Scherbelastungen erheblich stabilisiert.

Dadurch, dass bei dem erfindungsgemäßen Verfahren wenigstens nach Abscheiden eines ersten Schichtbereiches die jeweilige Brückenstruktur nach deren Anordnen über die Vertiefung bei der Abscheidung des zweiten Schichtbereichs wenigstens mit ihren beidseitig der jeweiligen Vertiefung gelegenen Abschnitten in den zweiten Schichtbereich eingebettet wird, ergibt sich eine verhältnismäßig einfache Herstellung einer trotz Vorhandenseins einer die mechanische Stabilität schwächenden Vertiefung eine mechanisch verhältnismäßig stabilen Schale.

Zweckmäßigerweise ist bei einer vorteilhaften Ausgestaltung einer erfindungsgemäßen Schale wenigstens eine Brückenstruktur aus einem metallischen Material. Diese Ausgestaltung zeichnet sich durch einen besonders einfachen Aufbau der jeweiligen Brückenstruktur aus.

Bei einer weiteren vorteilhaften Ausgestaltung einer erfindungsgemäßen Schale weist wenigstens eine Brückenstruktur eine metallische Oberfläche und einen nichtleitenden flexiblen Kern beispielsweise aus einem schmiegsamen Kunststoffmaterial auf. Diese Ausgestaltung schafft die Möglichkeit, die Brückenstruktur auch an komplexe Oberflächenstrukturen eines Badmodelles in verhältnismäßig einfacher Weise anzupassen.

Vorteilhafterweise weist bei einer weiteren vorteilhaften Ausgestaltung einer erfindungsgemäßen Schale wenigstens eine Brückenstruktur eine Anzahl von die jeweilige Brückenstruktur durchbrechenden Ausnehmungen auf. Dadurch läßt sich die Brückenstruktur verhältnismäßig einfach vollständig in den zweiten Schichtbereich einbetten.

Bei den vorgenannten Ausgestaltungen ist es im Hinblick auf eine verhältnismäßig einfache Herstellbarkeit und gute Anformbarkeit zweckmäßig, dass wenigstens eine Brückenstruktur aus einem metallischen Lochblech besteht.

Bei der letztgenannten Ausgestaltung ist es im Hinblick auf eine besonders gute Anformbarkeit zweckmäßig, dass wenigstens eine Brückenstruktur aus einem Geflecht mit sich kreuzenden biegsamen Strängen besteht.

Für eine besonders hohe Stabilität der Schale ist vorteilhafterweise vorgesehen, dass die Abscheideschicht wenigstens eine Brückenstruktur auch in ihrem sich über die jeweilige Vertiefung überspannenden Abschnitt vollständig umschließt.

Bei einer zweckmäßigen Ausgestaltung des erfindungsgemäßen Verfahrens ist vorgesehen, dass wenigstens eine Brückenstruktur vor Durchführen des zweiten Schrittes an den ersten Schichtbereich beispielsweise unter Verwendung von Metallpaste oder durch Löten oder Schweißen haftend angebracht wird. Dadurch wird bei einer Sicherung gegen unbeabsichtigtes Bewegen der jeweiligen Brückenstruktur auch ein besonders zuverlässiges Einbetten in den zweiten Schichtbereichs erzielt.

Bei einer weiteren zweckmäßigen Ausgestaltung des erfindungsgemäßen Verfahrens wird für eine besonders hohe Stabilität der sich ergebenden Schale der dritte Schritt solange durchgeführt, bis der zweite Schichtbereich die oder jede Brückenstruktur auch in ihrem sich über die jeweilige Vertiefung überspannenden Abschnitt umschließt.

Weitere zweckmäßige Ausgestaltungen und Vorteile der Erfindung sind Gegenstand der nachfolgenden Beschreibung von Ausführungsbeispielen unter Bezug auf die Figuren der Zeichnung. Es zeigen:
- Fig. 1: in einer schematischen, teilweise geschnittenen Darstellung ein Ausführungsbeispiel einer erfindungsgemäßen Vorrichtung zur Durchführung eines erfindungsgemäßen Verfahrens zur Herstellung einer erfindungsgemäßen Schale,
- Fig. 2: in einer Ansicht ein Ausführungsbeispiel einer teilweise fertiggestellten erfindungsgemäßen Schale mit einer Anzahl von eine längliche Vertiefung überspannenden Brückenstrukturen,
- Fig. 3: in einer gegenüber der Darstellung in Fig. 2 vergrößerten Ansicht zwei als Lochbleche ausgeführte Brückenstrukturen,
- Fig. 4: im Querschnitt im Bereich einer Vertiefung ein Ausführungsbeispiel einer erfindungsgemäßen Schale mit einer aus rundlichen Drähten gebildeten Brückenstruktur in einer Anordnung in einer erfindungsgemäßen Vorrichtung gemäß Fig. 1,
- Fig. 5 bis 9: im Querschnitt Ausschnitte von Ausführungsbeispielen erfindungsgemäßer Schalen mit jeweils verschieden ausgebildeten Vertiefungen und Brückenstrukturen und
- Fig. 10: im Querschnitt im Detail einen Rand einer Vertiefung mit einer Brückenstruktur bei einer erfindungsgemäßen Schale.

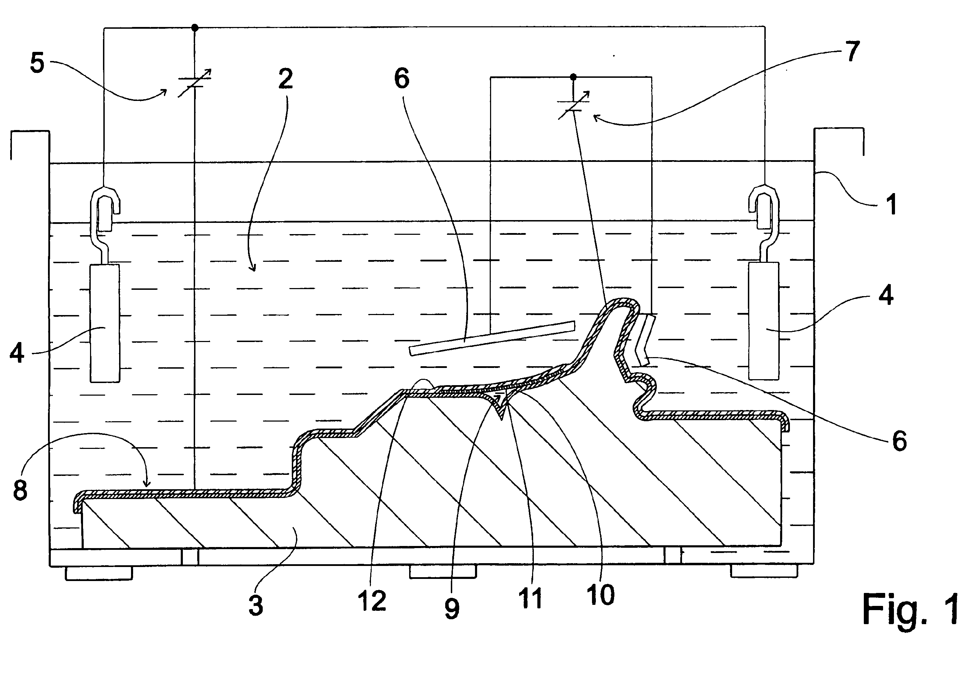

Fig. 1 zeigt in einer schematischen, teilweise geschnittenen Darstellung ein Ausführungsbeispiel einer erfindungsgemäßen Vorrichtung. Das Ausführungsbeispiel gemäß Fig. 1 verfügt über einen wannenartigen Galvanobadbehälter 1, der in der Darstellung gemäß Fig. 1 mit einer positiv geladene metallische Ionen aufweisenden Elektrolytlösung 2, insbesondere einem Nickelelektrolyt mit positiven Nickel-Ionen, gefüllt ist. In dem Galvanobadbehälter 1 ist ein Badmodell 3 angeordnet, das vollständig in die Elektrolytlösung 2 eingetaucht ist. Innerhalb des Galvanobadbehälters 1 sind randseitig Hauptanoden 4 angeordnet, die elektrisch mit dem positiven Pol einer einen Gleichstrom einstellbarer Stärke liefernden Hauptanodengleichstromquelle 5 verbunden sind. Weiterhin sind in dem Galvanobadbehälter 1 Hilfsanoden 6 vorhanden, die elektrisch an den positiven Pol einer einen Gleichstrom einstellbarer Stärke liefernden Hilfsanodengleichstromquelle 7 angeschlossen sind.

Das Badmodell 3 weist eine elektrisch leitende Oberfläche auf, die elektrisch mit den negativen Polen sowohl der Hauptanodengleichstromquelle 5 als auch der Hilfsanodengleichstromquelle 7 verbunden ist. Bei Beaufschlagen der Hauptanoden 4 und der im Bereich von komplexeren Strukturen der elektrisch leitenden Oberfläche des Badmodelles 3 angeordneten Hilfsanoden 6 mit Gleichstrom scheiden sich aus der Elektrolytlösung 2 positiv geladene metallische Ionen an der an die negativen Pole der Hauptanodengleichstromquelle 5 und der Hilfsanodengleichstromquelle 7 angeschlossenen elektrisch leitenden Oberfläche des Badmodelles 3 ab, so dass sich an der elektrisch leitenden Oberfläche des Badmodelles 3 eine Schale 8 ausbildet.

Bei dem Ausführungsbeispiel gemäß Fig. 1 ist in dem Badmodell 3 eine längliche Vertiefung 9 vorhanden, der gegenüberliegend eine Hilfsanode 6 angeordnet ist. Bei dem erfindungsgemäßen Verfahren wird in einem ersten Schritt ein erster Schichtbereich 10 auf der elektrisch leitenden Oberfläche des Badmodelles 3 abgeschieden. Nach Erreichen einer bestimmten ersten Dicke des ersten Schichtbereiches 10 wird in einem zweiten Schritt über die Vertiefung 9 wenigstens eine zumindest in Oberflächenbereichen elektrisch leitende Brückenstruktur 11 gelegt. Anschließend wird in einem dritten Schritt unter Fortsetzen der galvanischen Abscheidung von metallischen Ionen ein zweiter Schichtbereich 12 mit einer bestimmten zweiten Dicke aufgebaut. Dabei wird die Brückenstruktur 11 wenigstens mit beidseitig der Vertiefung 9 angeordneten Abschnitten in die aus dem ersten Schichtbereich 10 und dem zweiten Schichtbereich 12 gebildete Abscheideschicht der Schale 8 eingebettet.

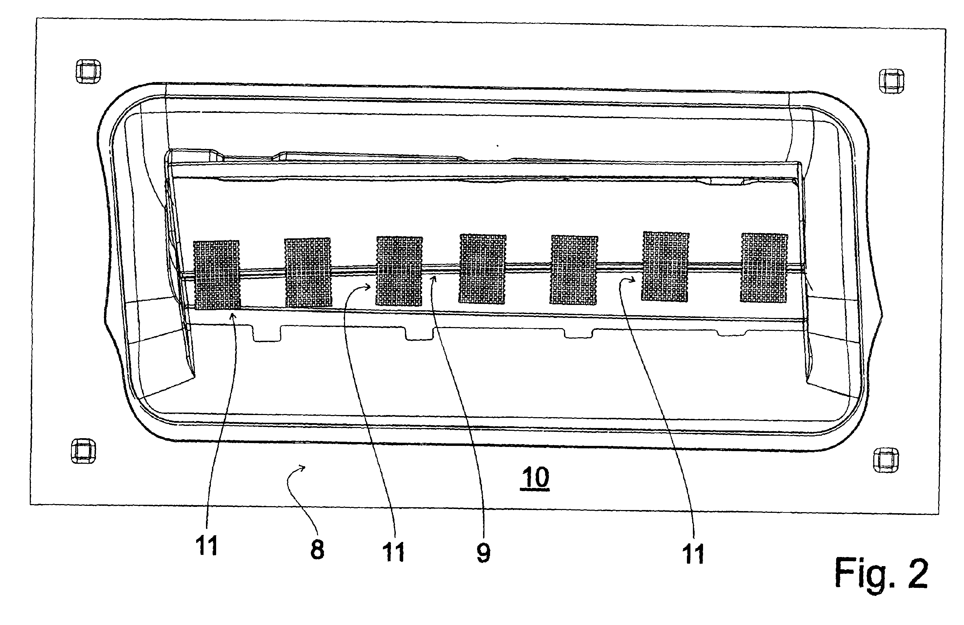

Fig. 2 zeigt in einer Ansicht ein Ausführungsbeispiel einer unter Ausbildung des ersten Schichtbereiches 10 teilweise fertiggestellten erfindungsgemäßen Schale 8 mit einer Anzahl von beispielsweise die längliche Vertiefung 9 in der Darstellung von Fig. 1 überspannenden Brückenstrukturen 11. Die Brückenstrukturen 11 sind in diesem Ausführungsbeispiel vorzugsweise mit in etwa gleichen, der Breite einer Brückenstruktur 11 entsprechenden Abständen entlang der Vertiefung 9 verteilt und erstrecken sich beidseitig der Vertiefung 9 mit in etwa gleich langen einzubettenden Abschnitten.

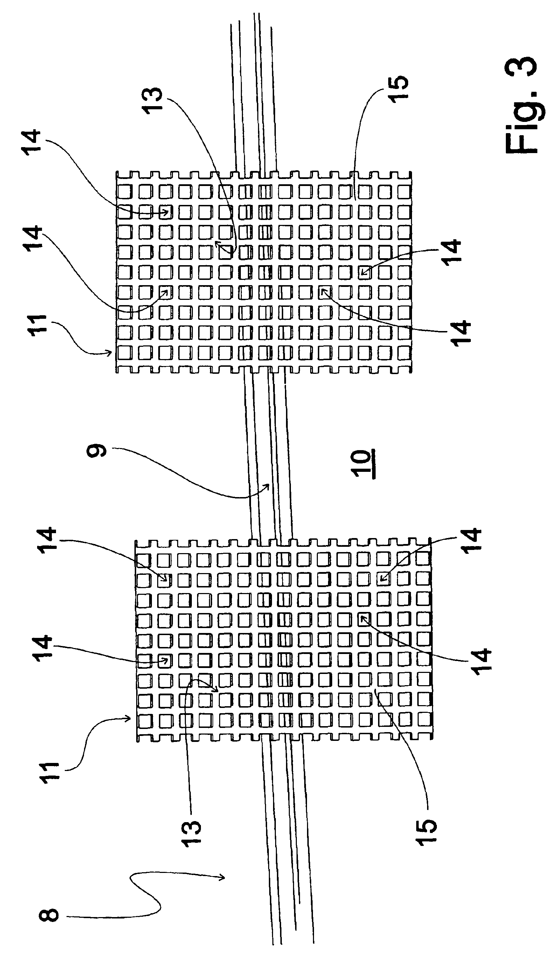

Fig. 3 zeigt in einer gegenüber der Darstellung in Fig. 2 vergrößerten Ansicht zwei als Lochbleche 13 ausgeführte Brückenstrukturen 11. Die Lochbleche 13 verfügen über eine Vielzahl von Ausnehmungen 14, die unter Ausbildung eines Restgitters 15 in ein Metallblech beispielsweise eingestanzt worden sind. Dadurch ist zum einen eine verhältnismäßig leichter Verformbarkeit der Brückenstrukturen 11 zum Anpassen an die Konturen der Schale 8 erzielt und zum anderen sichergestellt, dass bei dem dritten Schritt mit Abscheiden des zweiten Schichtbereiches 12 der galvanische Prozess auch im Bereich der Vertiefung 9 mit einem Zuwachsen der Ausnehmungen 14 sowie einem vollständigen Einbetten der Brückenstrukturen 11 in den zweiten Schichtbereich 12 und damit einer mechanischen Stabilisierung der Brückenstrukturen 11 fortgesetzt wird.

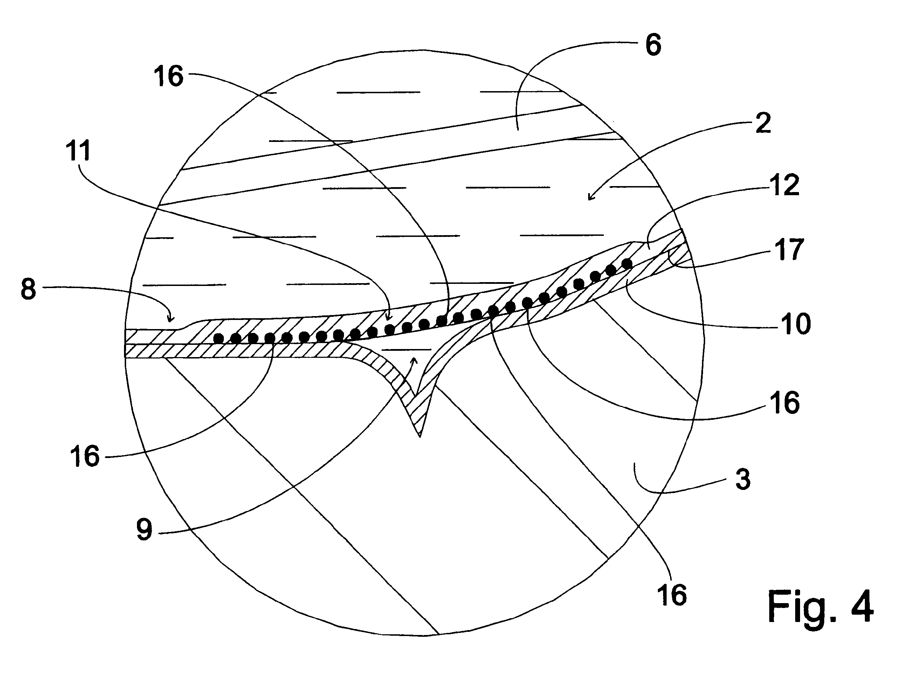

Fig. 4 zeigt im Querschnitt ein Ausführungsbeispiel einer erfindungsgemäßen Schale 8 mit einer aus rundlichen metallischen oder metallisch beschichteten Strängen 16 gebildeten Brückenstruktur 11 in einer Anordnung in einer erfindungsgemäßen Vorrichtung gemäß Fig. 1 im Bereich der Vertiefung 9. Aus Fig. 4 ist besonders deutlich ersichtlich, dass die sich beidseitig der Vertiefung 9 erstreckenden Abschnitte der dargestellten Brückenstruktur 11 vollständig in die durch die Schichtbereiche 10, 12 gebildete Abscheideschicht eingebettet sind. Durch die Unterbrechung der galvanischen Abscheidung beim Durchführen des zweiten Schrittes mit dem Auflegen der oder jeder Brückenstruktur 11 über die jeweilige Vertiefung 9 ist zwischen den in ihrer Mikrostruktur in der Regel ganz geringfügig unterschiedlichen Schichtbereichen 10, 12 eine Diskontinuitätsfläche 17 ausgebildet.

In ihrem die jeweilige Vertiefung 9 überbrückenden Abschnitt ist die Brückenstruktur 11 mit Material des zweiten Schichtbereiches 12 zwischen den Strängen 16 aufgefüllt und überschichtet, so dass die Brückenstrukturen 11 mit den für eine einfache Anformung an die Konturen der Schale 8 vorteilhafterweise verhältnismäßig flexiblen Stränge 16 nach Abschluss des dritten Schrittes versteift sind. Dadurch wird eine Verformung der Vertiefung 9 durch die Verbindung der beidseitig der Vertiefung 9 gelegenen Bereiche der Schale 8 über die insbesondere auf Zug, in einem gewissen Umfang aber auch auf Druck belastbaren, eingebetteten und vorzugsweise mit Material aus dem zweiten Schichtbereich 12 aufgefüllten sowie überschichteten Brückenstrukturen 11 wirkungsvoll verhindert.

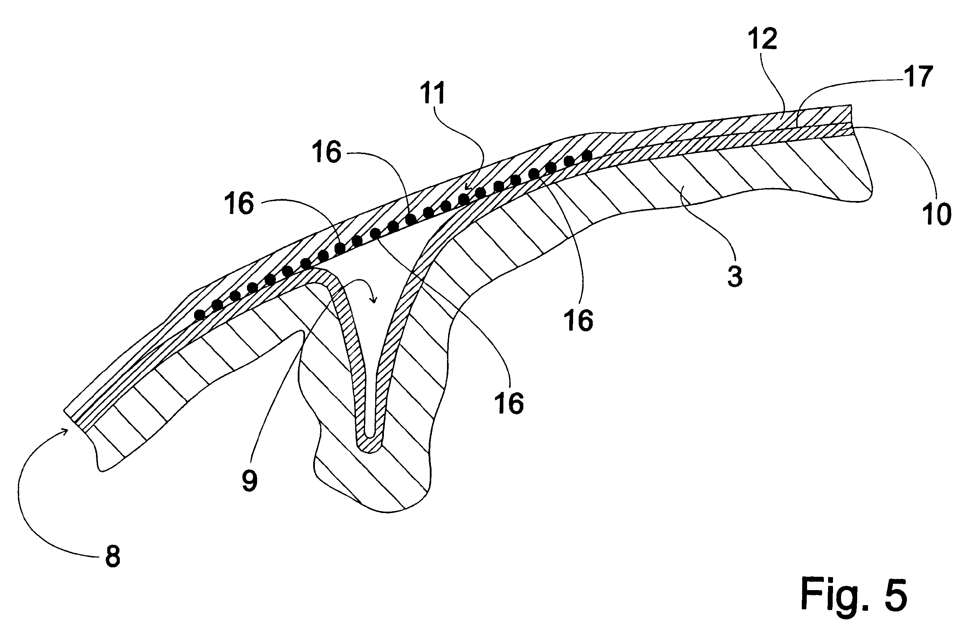

Fig. 5 bis 9 zeigen im Querschnitt Ausschnitte von Ausführungsbeispielen noch auf einem Badmodell 3 angeordneter erfindungsgemäßer Schalen 8 mit jeweils verschieden ausgebildeten Vertiefungen 9 und aus Strängen 16 aufgebauten Brückenstrukturen 11.

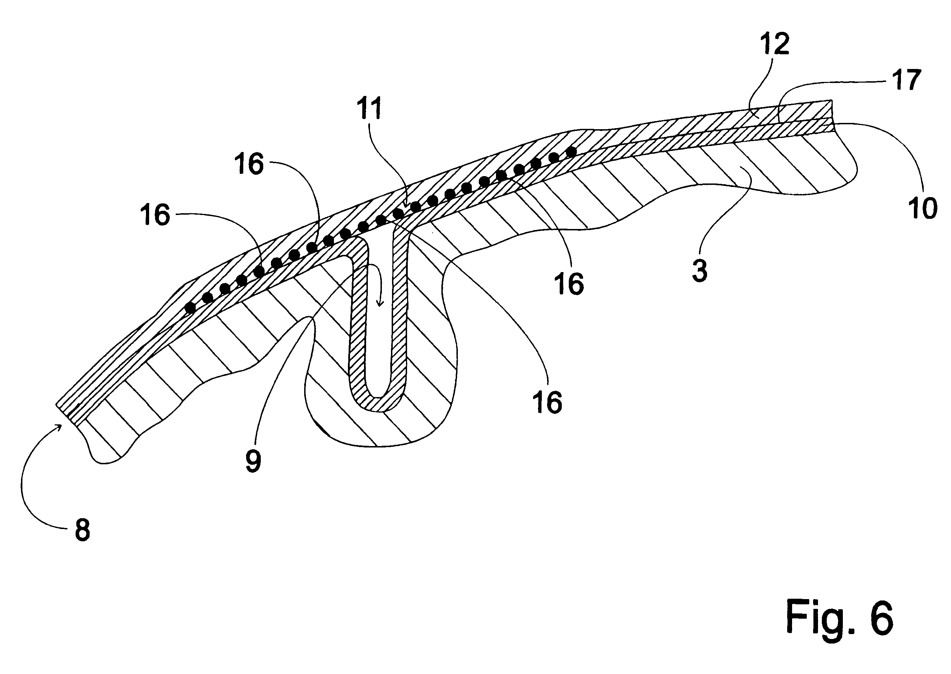

Aus Fig. 5 und Fig. 6 ist ersichtlich, dass die dargestellte eingebettete und aufgefüllte sowie überschichtete Brückenstruktur 11 über eine einen abgerundeten Vertiefungsgrund aufweisende sowie gemäß Fig. 5 eine sich erweiternde oder gemäß Fig. 6 mit im wesentlichen parallelen Seitenwänden ausgebildete Vertiefung 9 angeordnet ist. Dadurch werden die zwar im Vertiefungsgrund mit jeweils einem ersten Schichtbereich 10 von im wesentlichen gleichmäßiger Dicke aufgefüllten, aber dennoch lediglich verhältnismäßig gering belastbaren Vertiefungen 9 vor allem gegenüber Zugbelastungen, in einem gewissen Umfang jedoch auch gegenüber Druckbelastungen und Scherbelastungen wirkungsvoll stabilisiert.

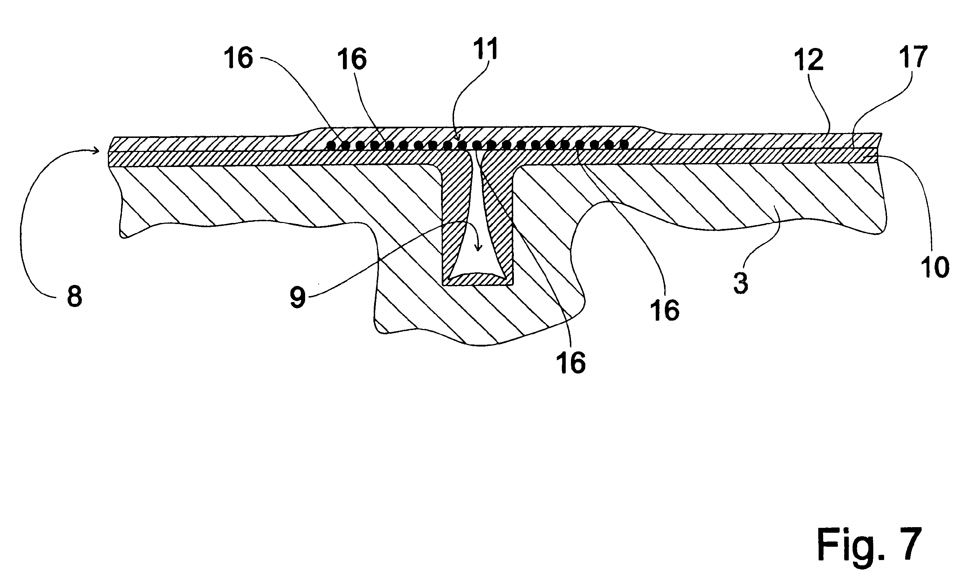

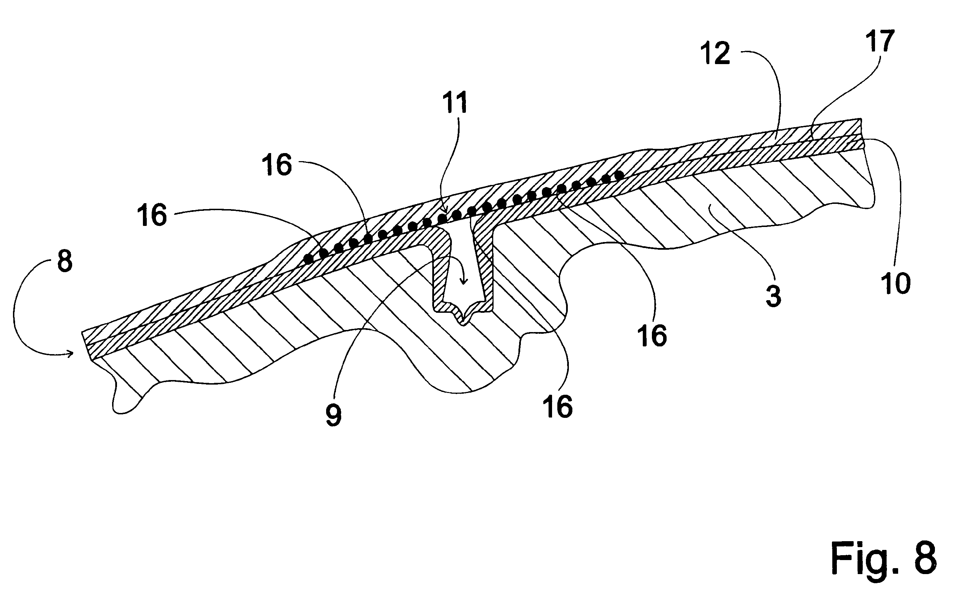

Aus Fig. 7 und Fig. 8 ersichtlich, dass die dargestellte eingebettete, aufgefüllte sowie überschichtete Brückenstruktur 11 über eine einen im wesentlichen rechteckförmigen Vertiefungsgrund und parallele Seitenwände aufweisende sowie gemäß Fig. 7 mit einem planen oder gemäß Fig. 8 zur Homogenisierung der Abscheidung mit einem eine zipfelartige Ausbuchtung aufweisenden Vertiefungsboden ausgebildete Vertiefung 9 angeordnet ist. Dadurch werden die aufgrund der verhältnismäßig scharfkantigen Übergänge im Bereich des jeweiligen Vertiefungsgrundes mit einem lediglich verhältnismässig dünnwandig ausgebildeten ersten Schichtbereich 10 nur sehr gering belastbaren Vertiefungen 9 vor allem gegenüber Zugbelastungen, in einem gewissen Umfang jedoch auch gegenüber Druckbelastungen und Scherbelastungen erheblich stabilisiert.

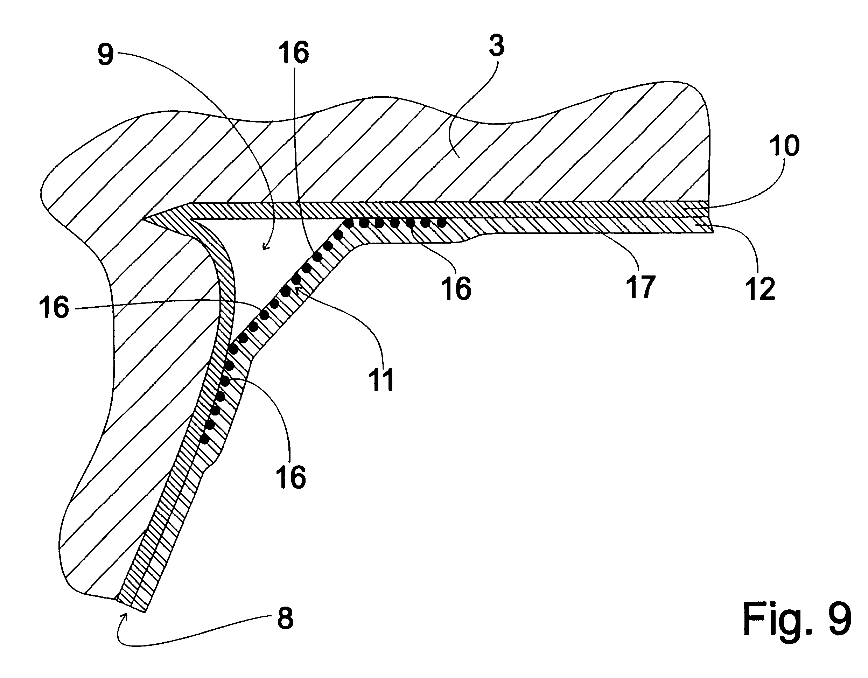

Aus Fig. 9 ist ersichtlich, dass im Bereich einer durch winklig aufeinander zu laufende Flächen des Badmodelles 3 ausgebildeten Vertiefung 9 durch Anformen von Brückenstrukturen 11 an die aufeinander zu laufenden Flächen und Überspannen der im Bereich der aufeinander zu laufenden Flächen ausgebildeten Vertiefung 9 auch diese verhältnismäßig gering belastbaren Bereiche der Schale 8 wirkungsvoll gegenüber Zugbelastungen, Druckbelastungen und Scherbelastungen stabilisierbar sind.

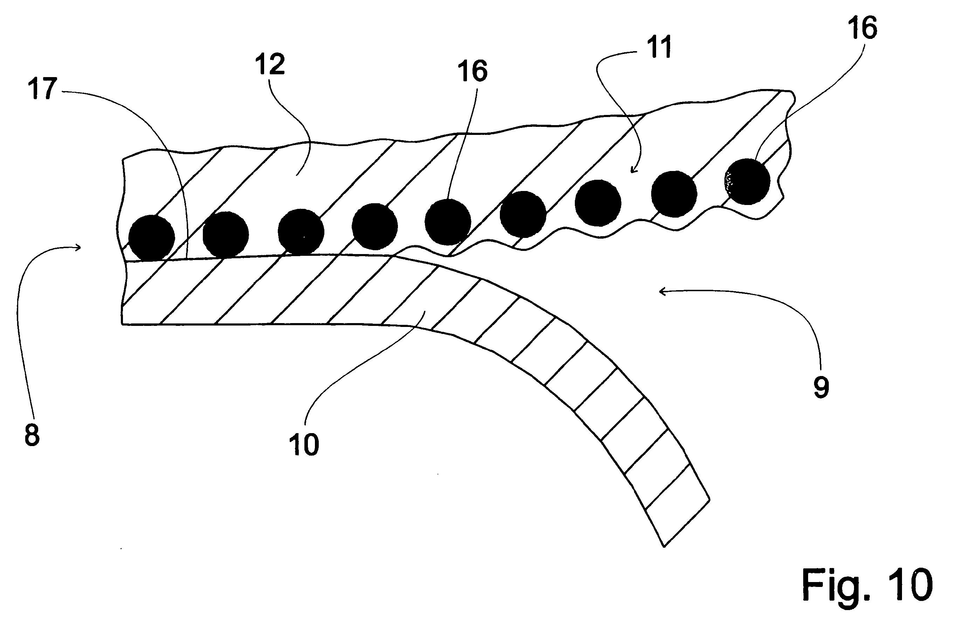

Fig. 10 zeigt im Querschnitt im Detail einen Rand einer Vertiefung 9 mit einer Brückenstruktur 11 bei einem Ausführungsbeispiel einer erfindungsgemäßen Schale 8. Bei dem Ausführungsbeispiel gemäß Fig. 10 ist ersichtlich, dass bei entsprechender Dauer des dritten Schrittes mit Anwachsen des zweiten Schichtbereiches 12 die Brückenstruktur 11 auch in dem die Vertiefung 9 überbrückenden Abschnitt vollständig in den zweiten Schichtbereich 12 eingebettet ist. Dadurch wird eine besonders hohe Stabilisierung erzielt.

## Patentansprüche

1. Durch galvanische Abscheidung hergestellte Schale mit einer Schichtbereiche (10,12) aufweisenden Abscheideschicht, die wenigstens eine Vertiefung (9) aufweist, wobei als strukturell separates Element wenigstens eine stabilisierende Brückenstruktur (11) vorhanden ist, die mit Abschnitten beidseitig einer Vertiefung (9) in einen Schichtbereich (12) eingebettet ist und die jeweilige Vertiefung (9) überspannt, so dass die oder jede überspannte Vertiefung (9) stabilisiert ist.

2. Schale nach Anspruch 1, **dadurch gekennzeichnet, dass** wenigstens eine Brückenstruktur (11) aus einem metallischen Material ist.

3. Schale nach Anspruch 1 oder Anspruch 2, **dadurch gekennzeichnet, dass** wenigstens eine Brückenstruktur (11) eine metallische Oberfläche und einen nichtleitenden flexiblen Kern aufweist.

4. Schale nach einem der Ansprüche 1 bis 3, **dadurch gekennzeichnet, dass** wenigstens eine Brückenstruktur (11) eine Anzahl von die jeweilige Brückenstruktur (11) durchbrechenden Ausnehmungen (14) aufweist.

5. Schale nach Anspruch 4, **dadurch gekennzeichnet, dass** wenigstens eine Brückenstruktur (11) aus einem metallischen Lochblech (13) besteht.

6. Schale nach Anspruch 4 oder Anspruch 5, **dadurch gekennzeichnet, dass** wenigstens eine Brückenstruktur (11) aus einem Geflecht mit sich kreuzenden biegsamen Strängen (16) besteht.

7. Schale nach einem der Ansprüche 1 bis 6, **dadurch gekennzeichnet, dass** die Abscheideschicht (10, 12) wenigstens eine Brückenstruktur (11) auch in ihrem sich über die jeweilige Vertiefung (9) überspannenden Abschnitt vollständig umschließt.

8. Verfahren zur Herstellung der Schale nach einem der Ansprüche 1 bis 7, bei dem in einem ersten Schritt in einer Elektrolytlösung (2) auf einer elektrisch leitenden Oberfläche eines in die Elektrolytlösung (2) eingetauchten Badmodelles (3) galvanisch ein erster Schichtbereich (10) einer Abscheideschicht abgeschieden wird, in einem zweiten Schritt über eine Vertiefung (9) als strukturell separates Element wenigstens eine stabilisierende, zumindest in Oberflächenbereichen elektrisch leitende Brückenstruktur (11) mit Abschnitten auf den ersten Schichtbereich (10) gelegt wird und in einem dritten Schritt wenigstens solange ein zweiter Schichtbereich (12) der Abscheideschicht abgeschieden wird, bis die oder jede Brückenstruktur (11) beidseitig der jeweiligen Vertiefung (9) in den zweiten Schichtbereich (12) eingebettet ist.

9. Verfahren nach Anspruch 8, **dadurch gekennzeichnet, dass** wenigstens eine Brückenstruktur (11) vor Durchführen des zweiten Schrittes an den ersten Schichtbereich (10) haftend angebracht wird.

10. Verfahren nach Anspruch 8 oder Anspruch 9, **dadurch gekennzeichnet, dass** der dritte Schritt solange durchgeführt wird, bis der zweite Schichtbereich (12) die oder jede Brückenstruktur (11) auch in ihrem sich über die jeweilige Vertiefung (9) überspannenden Abschnitt umschließt.

## Claims

1. Shell produced by galvanic deposition, comprising a deposition layer having layer regions (10, 12), said deposition layer having at least one depression (9), wherein at least one stabilising bridge structure (11) is provided as a structurally separate element, said bridge structure being embedded with sections in a layer region (12) on both sides of a depression (9) and bridging said depression (9), so that the, or each, bridged depression (9) is stabilised.

2. Shell according to claim 1, **characterised in that** at least one bridge structure (11) is made from a metallic material.

3. Shell according to claim 1 or 2, **characterised in that** at least one bridge structure (11) has a metallic surface and a non-conductive flexible core.

4. Shell according to one of the claims 1 to 3, **characterised in that** at least one bridge structure (11) has a plurality of cut-outs (14) perforating the bridge structure (11).

5. Shell according to claim 4, **characterised in that** at least one bridge structure (11) comprises a metallic perforated sheet (13).

6. Shell according to claim 4 or 5, **characterised in that** at least one bridge structure (11) comprises a braid with mutually crossing pliable strands (16).

7. Shell according to one of the claims 1 to 6, **characterised in that** the deposition layer (10, 12) fully encloses at least one bridge structure (11), including in the section thereof bridging the respective depression (9).

8. Method for producing the shell according to one of the claims 1 to 7 wherein, in a first step in an electrolyte solution (2), a first layer region (10) of a deposition layer is galvanically deposited onto an electrically conductive surface of a pattern (3) immersed in the electrolyte solution (2), in a second step, at least one stabilising bridge structure (11), which is electrically conductive at least in surface regions is laid with sections on the first layer region (10) over a depression (9) as a structurally separate element and, in a third step, a second layer region (12) of the deposition layer is deposited at least until the, or each, bridge structure (11) is embedded in the second layer region (12) on both sides of the respective depression (9).

9. Method according to claim 8, **characterised in that** at least one bridge structure (11) is adhesively applied to the first layer region (10) before the second step is carried out.

10. Method according to claim 8 or 9, **characterised in that** the third step is carried out until the second layer region (12) encloses the, or each, bridge structure (11), including in the section thereof bridging the respective depression (9).

## Revendications

1. Coque fabriquée par électrodéposition avec une couche de déposition présentant des zones (10,12) qui présente au moins un creux (9) pour lequel il existe comme élément structurel séparé au moins une structure pont (11) de stabilisation qui est logée dans une zone (12) avec des sections des deux côtés d'un creux (9) et qui enjambe le creux correspondant (9) de manière à ce que le creux ou chaque creux enjambé (9) soit stabilisé.

2. Coque selon la revendication 1, **caractérisée en ce qu'**au moins une structure de pont (11) est en matériau métallique.

3. Coque selon la revendication 1 ou revendication 2, **caractérisée en ce qu'**au moins une structure de pont (11) comporte une surface métallique et un noyau flexible non-conducteur.

4. Coque selon l'une des revendications 1 à 3 **caractérisée en ce qu'**au moins une structure de pont (11) comporte une pluralité d'évidements (14) ajourant la structure de pont correspondante (11).

5. Coque selon la revendication 4, **caractérisée en ce qu'**au moins une structure de pont (11) est formée d'une tôle perforée métallique (13).

6. Coque selon la revendication 4 ou 5, **caractérisée en ce qu'**au moins une structure de pont (11) est composée d'un enchevêtrement de tiges flexibles croisées (16).

7. Coque selon l'une des revendications 1 à 6 **caractérisée en ce que** la couche de déposition (10, 12) entoure entièrement au moins une structure de pont (11) également dans sa section enjambant le creux correspondant (9).

8. Procédé de fabrication de la coque selon l'une des revendications 1 à 7 lors duquel dans une première étape une première zone (10) de couche d'électrodéposition est déposée dans une solution électrolytique (2) sur une surface électrique conductrice d'un modèle de bain (3) plongé dans la solution électrolytique (2), dans une deuxième étape, on pose au-dessus d'un creux (9), comme élément structurel séparé, au moins une structure de pont (11) de stabilisation électriquement conductrice, avec des sections sur la première zone de déposition (10); et dans une troisième étape, on dépose une couche de déposition dans une deuxième zone de déposition (12) jusqu'à ce que la ou chaque structure de pont (11) soit noyée des deux côtés dans chaque creux (9) dans la deuxième zone de déposition (12).

9. Procédé selon la revendication 8, **caractérisé en ce qu'**au moins une structure de pont (11) est appliquée de manière adhérente à la première zone de déposition (10) avant l'exécution de la deuxième étape.

10. Procédé selon la revendication 8 ou revendication 9, **caractérisé en ce que** la troisième étape est exécutée jusqu'à ce que la deuxième zone de déposition (12) entoure la ou chaque structure pont (11) également dans sa section enjambant le creux correspondant (9).
